# EUROPÄISCHE PATENTSCHRIFT

(11) **EP 1 292 622 B1**
(45) Veröffentlichungstag und Bekanntmachung des Hinweises auf die Patenterteilung: **18.01.2006**
(21) Anmeldenummer: 01940574.5
(22) Anmeldetag: 15.06.2001
(51) Int. Cl.: C08B 33/04, C03B 33/033

(54) **VERFAHREN UND VORRICHTUNG ZUR HERSTELLUNG VON GLASSCHEIBEN BELIEBIGER KONTUR AUS FLACHGLAS**
METHOD AND DEVICE FOR PRODUCING GLASS PANES OF ANY DESIRED CONTOUR FROM SHEET GLASS
PROCEDE ET DISPOSITIF DE FABRICATION DE PLAQUES DE VERRE D'UN PROFIL QUELCONQUE EN VERRE PLAT

(30) Priorität: 21.06.2000 DE 10030388
(43) Veröffentlichungstag der Anmeldung: 19.03.2003
(73) Patentinhaber: Schott AG, 55122 Mainz (DE)
(72) Erfinder: LUETTGENS, Thomas, 55126 Mainz (DE); HARTMANN, Winfred, 55452 Rümmelsheim (DE); HOETZEL, Bernd, D-55286 Wörrstadt (DE); MARKSCHLÄGER, Patrick, 55268 Nieder-Olm (DE); NEUMAYR, Andreas, 55116 Mainz (DE)
(74) Vertreter: Sawodny, Michael-Wolfgang
(86) Internationale Anmeldenummer: PCT/EP2001/006801
(87) Internationale Veröffentlichungsnummer: WO 2001/098368

(56) Entgegenhaltungen:
- EP-A- 0 491 055
- EP-A- 0 600 094
- EP-A- 0 872 303
- FR-A- 2 620 440
- US-A- 1 920 641
- US-A- 2 504 655

## Beschreibung

Die Erfindung betrifft ein Verfahren zur Herstellung von Glasscheiben beliebiger Kontur aus Flachgläsern, wobei in einem ersten Schritt eine Trennlinie entlang einer Kontur bis zu einer vorbestimmten Tiefe mit Hilfe einer Schneideeinrichtung in mindestens eine Seite einer Glasscheibe eingetrieben wird. Sodann wird die Glasscheibe positioniert und vom Flachglas entlang der Kontur getrennt. Insbesondere soll das Verfahren zur Herstellung von Glassubstraten für elektronische Speichermedien eingesetzt werden.

Neben dem Verfahren stellt die Erfindung auch eine Vorrichtung zum Brechen von Glasscheiben beliebiger Kontur aus einem Flachglas zur Verfügung. Auch diese Vorrichtung soll insbesondere zur Herstellung von Glassubstraten für elektronische Speichermedien mit einem Außendurchmesser und einem Innendurchmesser aus einer Glasscheibe eingesetzt werden, wobei eine derartige Vorrichtung eine Unterlage sowie eine Drückeinrichtung umfaßt.

Die Verwendung von Glassubstraten für magnetische Speichermedien, insbesondere Festplatten wird derzeit überwiegend in Laptop-Anwendungen praktiziert. Der Vorteil der Glassubstrate gegenüber den derzeit überwiegend verwendeten Aluminiumsubstraten liegt in der höheren Steifigkeit, Härte, E-Modul und damit dem besseren Widerstand gegen Stöße und der Verringerung des Flatterns.

Die Anwendbarkeit von Glassubstraten für magnetische Speichermedien, insbesondere Festplatten wurde bislang insbesondere dadurch erschwert, daß Gläser nur mit sehr hohem technischen Aufwand mit geeigneten Oberflächeneigenschaften zur Verfügung gestellt werden konnten.

Dies trifft insbesondere für die Herstellung von Glassubstraten durch Pressen und Floaten zu, aber auch auf Glasbänder, die durch einen Ziehprozeß, wie beispielsweise im US-Patent 5,725,625 offenbart, hergestellt wurden.

So ist es bei den gezogenen Glasbändem gemäß dem US-Patent 5,725,625 notwendig, die Oberfläche des gezogenen Glases zwei Läpp- und zwei weiteren Polierschritten zu unterziehen.

Mit einem neuartigen Verfahren, wie in der WO-A2-09/49620 dargelegt, ist es gelungen ein gezogenes Glassubstrat anzugeben, das für eine Ebenheit bzw. Flatness ≤ 25 *µ*m, insbesondere ≤ 10 *µ*m, eine Waviness < 100 Å, insbesondere < 40 Å, eine Dickenvariation von ± 20 *µ*m, insbesondere ± 15 *µ*m und eine Oberflächenrauhheit < 10 Angström, insbesondere < 5Å verfügt. Die obige Druckschrift ist am 12.07.2001 veröffentlicht und gehört damit zum Stand der Technik gemäß Art. 54(3) EPÜ.

Die Oberflächeneigenschaften, Ebenheit, Waviness und Oberflächenrauhheit werden gemäß bekannter Methode, wie beispielsweise Standardmeßmethoden für Display-Substrate wie in SEMI D15-1296 von SEMI (1996) beschrieben, bestimmt. Unter Ebenheit wird die Abweichung von einer ideal ebenen Oberfläche gemessen über die Gesamtoberfläche verstanden, unter Welligkeit bzw. Waviness der mittlere Wellenlängenanteil der Abweichung von einer idealen Oberfläche bezogen auf eine mittelgroße Bezugsstrecke und unter Oberflächenrauhigkeit die Abweichung im kurzen Wellenlängenbereich bezogen auf eine kurze Auswertemeßstrecke. Für derartig gute Oberflächen ist eine Nachbearbeitung wie beispielsweise für die Oberflächen gemäß der US-A-5725625 nicht mehr notwendig. Es ist daher erstrebenswert, für Glassubstrate Verfahren zur Herstellung von elektronischen Speichermedien anzugeben, bei denen auf eine Nachbearbeitung der Oberflächen ganz verzichtet oder deutlich reduziert werden kann.

Verfahren, wie sie derzeit zum Stand der Technik zählen, eignen sich nicht für die Weiterbearbeitung der gezogenen bzw. gefloateten Glasbänder mit einer Ebenheit ≤ 25 µm, einer Waviness < 100 Å, einer Dickenvariation von ± 20 µm sowie einer Oberflächenrauhheit < 10 Å, bei dem es auf Schnitte mit glatten Kanten ankommt, wobei Schnitte mit einer beliebig vorgegebenen Kontur möglich sind und eine Beschädigung der Oberfläche während des Bearbeitungsprozesses weitgehend ausgeschlossen werden kann.

Ein Ansatz, sowohl Splitter als auch Ausmuschelungen und Mikrorisse zu vermeiden, besteht im Trennen von Glas auf der Basis thermisch generierter mechanischer Spannung. Hierbei wird der Strahl einer Wärmequelle, der auf das Glas gerichtet ist, mit fester Geschwindigkeit relativ zu dem Glas bewegt und so eine hohe thermomechanische Spannung erzeugt, die dazu führt, daß das Glas Risse bildet. Diese thermomechanische Spannung wird durch einen dem Wärmestrahl nachlaufenden Kühlspot noch verstärkt. Der notwendigen Eigenschaft der Wärmequelle, die thermische Energie lokal, d.h. mit einer Genauigkeit besser einem Millimeter, besonders bevorzugt besser als 100 Mikrometer, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt. Das Glas wird durch den Laserstrahl mit Startritz zunächst angeritzt und anschließend mechanisch gebrochen. Dieses Verfahren wird als sogenannte Ritzen-Brechen-Methode bezeichnet.

Laserstrahl-Trennverfahren, die durch eine lokale Erwärmung durch den fokussierten Laserstrahl in Verbindung mit einer Kühlung von außen eine thermomechanische Spannung bis über die Bruchfestigkeit des Werkstoffes induzieren, sind aus der EP 0 872 303 A2, der DE 693 04 194 T2 und der DE 43 05 107 C2 sowie der US 5,120,926 bekannt geworden.

Die GB-A-1433563 zeigt ein Verfahren, bei dem mit Hilfe eines Lasers eine Trennlinie in ein Glassubstrat eingebracht wird und das Glas dann entlang dieser Trennlinie mit Hilfe einer Schneideeinrichtung, die eine Härte größer als die Härte von Glas aufweist, gebrochen wird. Beispiele für derartige Schneideeinrichtungen sind Diamant- oder Aluminium-Schneideeinrichtungen.

Aus der US-2372215 ist ein alternatives Ritz-Brech-Verfahren bekanntgeworden. Bei diesem Verfahren wird mit Hilfe eines Schneidewerkzeuges, beispielsweise eines Diamanträdchens, eine Trennlinie in eine Glasoberfläche bis zu einer Tiefe T eingeritzt und das Glas anschließend beispielsweise durch mechanische Einwirkung entlang dieser Trennlinie gebrochen.

In einer bevorzugten Ausführungsform wird das Brechen des Glases entlang der Trennlinie T dadurch erreicht, daß in das Glas gezielt Temperaturspannungen eingebracht werden.

Glassubstrate, insbesondere für elektronische Speichermedien, lassen sich nach der vorbeschriebenen "Ritzen-Brechen-Methode" gemäß dem Stand der Technik, insbesondere wegen ihrer Dicke nicht mit der notwendigen Qualität herstellen.

Aus der EP-A-0491055 ist eine Vorrichtung zum Schneiden einer Glasplatte bekannt geworden, bei der die Glasplatte von einem Tragtisch unterstützt wird, wobei die Glasplatte entlang einer Schneidlinie gebrochen wird.

Hierbei wirkt die Brecheinrichtung direkt auf die Glasplatte ein.

Aus der FR-A-2620440 und der US-A-1-1920641 ist bekannt geworden, eine angeritzte Glasplatte auf einer Unterlage zu positionieren und so eine Kraft auf die Glasplatte aufzubringen. Die Glasplatte wird dann mit Hilfe einer Vakuumkraft, die auf die Glasplatte nach oben wirkt, herausgebrochen.

Aufgabe der Erfindung ist es, ein Verfahren zur Herstellung von Glasscheiben beliebiger Kontur aus Flachgläsern, insbesondere Glassubstrate für Speichermedien, anzugeben, das möglichst wenige Prozeßschritte umfaßt und bei dem die einzelnen Glassubstrate für elektronische Speichermedien weitgehend ohne Beschädigung der beim Glasziehprozeß erreichten Oberflächen hergestellt werden können. Diese Verfahren sollen insbesondere die beim Glaszieh- oder Floatprozeß erreichten Oberflächeneigenschaften einer Ebenheit ≤ 25 µm, einer Waviness < 100 Å, einer Dickenvariation ± 20 µm sowie einer Oberflächenrauhheit < 10 Å nicht wesentlich verschtechtem.

Erfindungsgemäß wird diese Aufgabe durch das Verfahren gemäß Anspruch 1 gelöst, wobei das Glas zwischen zwei flexiblen Platten angeordnet wird. Das sich hieraus ergebende Paket wird beispielsweise auf einen Ring als Unterlage, der einen Durchmesser hat, der größer als der durch die eine Kontur der Trennlinie definierte Durchmesser ist, aufgelegt. Nach dem Positionieren bspw. mit einer Positioniervorrichtung wird von der Gegenseite mit einem Stempel gedrückt, wobei der Durchmesser des Stempels kleiner ist als der der Öffnung. Durch die vom Stempel aufgebrachte Kraft werden die flexiblen Platten und das Glas gebogen. Es bauen sich Zugspannungen im Riß auf und der Riß wird durch das Material durchgetrieben, so daß ein Außenbereich eines Flachglases komplett von einem Innenbereich abgetrennt werden kann.

Der Vorteil dieses Verfahrens liegt insbesondere darin, daß durch das flexible Material ein Ausbrechen am Rand durch Schubspannungen zuverlässig verhindert wird und so die Oberfläche des Glassubstrates vor Ausbrechungen und Ausmuschelungen geschützt wird.

Das erfindungsgemäße Verfahren eignet sich sowohl für das Brechen bzw. Trennen eines Innenloches aus der Glasscheibe wie auch der Glasscheibe selbst aus dem Flachglas. Unter Brechen bzw. Trennen wird in der vorliegenden Anmeldung verstanden, daß die Trennlinie vollständig durch das Glassubstrat hindurchgetrieben wird, ohne daß Innen- und Außenbereich physikalisch voneinander getrennt sein müssen..

Das Separieren des Innenbereiches bzw. das Vereinzeln des Außenbereiches entlang der durch den Schritt des Brechens bzw. Trennens durch das Flachglases hindurchgetriebenen Trennlinien kann in einem weiteren Verfahrensschritt erfolgen. Hierzu werden beispielsweise Temperaturdifferenzen zwischen Innen- und Außenbereich und/oder zwischen Außenbereich und dem umgebenden Flachglas aufgebaut. Hierzu kann der Innenbereich beispielsweise gezielt durch flüssigen Stickstoff gekühlt werden. Zum Vereinzeln des Außenbereichens kann das umgebende Flachglas beispielsweise mit heißer Luft von 200° C erwärmt werden.

Die Erfindung soll nachfolgend anhand der Figuren beispielhaft beschrieben werden.

Es zeigen:
- Figur 1A: einen Ritz einer Trennlinie in einem Flachglassubstrat mit einer mechanischen Schneideeinrichtung
- Figur 1B: das Brechen des Flachglases entlang der Trennlinie
- Figuren 2A und 2B: das Eintreiben einer Trennlinie bis zur Tiefe T mit Hilfe einer Lasereinrichtung in ein Flachglas
- Figur 3: Brechen einer Glasscheibe mit einem Stempel in Kombination mit einem Ring

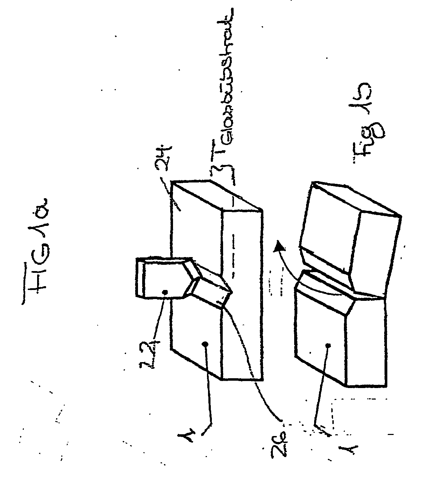

In den Figuren 1A und 1B ist das Durchtrennen eines Flachglases 1 mit Hilfe von Ritzen und Brechen, der sogenannten Ritz-Brech-Methode dargestellt. Bei der Ritz-Brech-Methode wird mit Hilfe einer Schneideeinrichtung, die auf die Glasoberfläche 24 aufgesetzt wird, eine Trennlinie 26 bis zu einer vorbestimmten Tiefe T_{Glassubstrat} in das Flachglas 1 geritzt.

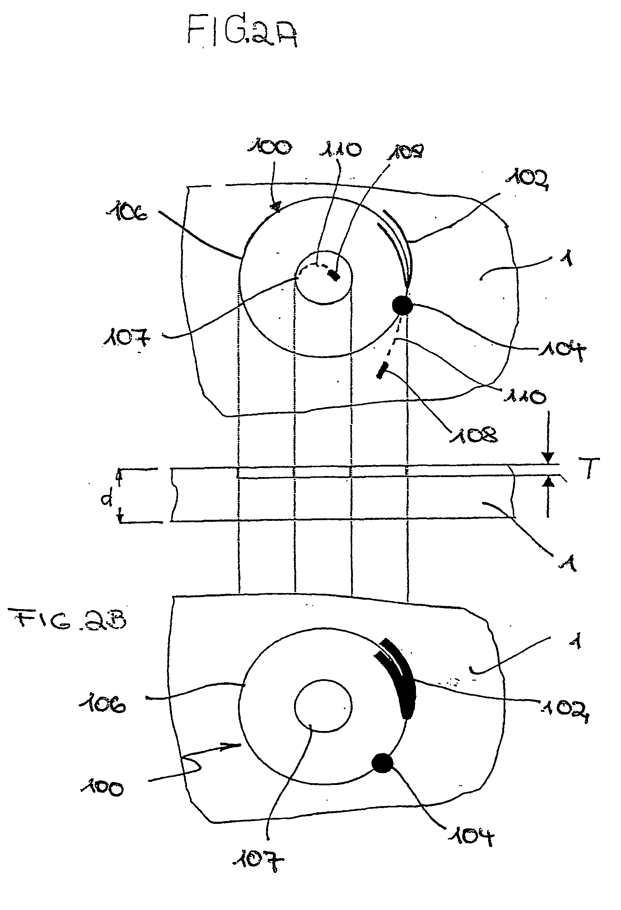

Nachdem mit Hilfe des Schneidwerkzeuges 22 das Glas entlang einer Trennlinie geritzt wurde, wird es wie in Figur 2B dargestellt, entlang der Trennlinie gebrochen. Beim Schneidwerkzug 22 kann es sich beispielsweise um eine mechanische Schneideeinrichtung wie ein Schneiderädchen handeln.

Besonders vorteilhaft ist es, wenn das Ritzen der Trennlinie in die Oberfläche 24 der Glasscheibe mit Hilfe einer Lasereinrichtung erfolgt. Ein besonders bevorzugtes Laser-Trenn-Verfahren ist in den Figuren 2A bis 2B beschrieben.

Beim Ritzen und Brechen mit Hilfe einer Laser-Schneide-Einrichtung wird die Oberfläche des Glases nur in geringem Ausmaß beschädigt. Auf eine Schutzbeschichtung kann daher gänzlich verzichtet werden.

Die Figur 2A zeigt das Grundprinzip des Anritzen für das Herausbrechen eines kreisringförmigen Glassubstrates für elektronische Speichermedien, hier einer Harddisk 100, aus einem Flachglas 1 mittels eines Laserstrahls. Das als Ausgangsprodukt dienende Flachglas 1 hat typischerweise eine Dicke d im Bereich von 0,3 mm bis 5 mm.

Im Beispiel nach Figur 2A ist das Laserstrahlprofil so ausgebildet, daß auf dem Flachglas 1 ein V-förmiger Brennfleck 102 entsteht, der entsprechend der zu trennenden kreisförmigen Kontur gekrümmt ist. Ihm läuft ein Kühlspot 104 nach, der die vom Laserstrahl erzeugte thermomechanische Spannung bis über die Bruchfestgikeit des Glases erhöht. Dieser Kühlspot kann zum Beispiel durch Aufblasen eines Kühlgases, vorzugsweise von kalter Luft oder eines Wasser-/Luftgemisches, realisiert werden. Der V-förmige Brennfleck kann vorzugsweise, wie beispielsweise in der EP 0 873 303 A2 beschrieben, realisiert werden.

Anstelle des dargestellten V- bzw. U-förmigen Brennfleckes 102 können auch andere Brennfleckgeometrien, zur Anwendung kommen.

Das Durchtrennen des Flachglases 1 erfolgt in zwei Schritten.

Im ersten Schritt gemäß Figur 2A sind die Parameter bezüglich Laserleistung, Laserstrahlprofil, Fokusablage, Vorschubgeschwindigkeit, d.h. Geschwindigkeit der Relativtaewegung zwischen Brennfleck 102, Flachglas 1 und Kühlung 104 so eingestellt, daß eine thermomechanische Spannung im Glas aufgebaut wird, die das Glas bis zu einer vorgegebenen Tiefe T ritzt. Die Ritztiefe T liegt dabei typischerweise im Bereich von 0,08 bis 0,3 mm.

Mit dieser Einstellung der Parameter kann sowohl die Außenkontur 106 für das Glassubstrat wie auch die Innenkontur 107 für die Innenbohrung des Glassubstrates geritzt werden, wobei jeweils ein mechanisch aufgebrachter Riß 108 als Startriß dient, der mit den bekannten Methoden, beispielsweise einem Schneidrädchen, erzeugt wird. Mit besonderem Vorteil wird der Startriß 108 mit einem Laserritz 110 so weitergeführt, daß dieser tangential in die Kreiskrümmung der Außen- und Innenkontur übergeht. Dieses Anritzen unterstützt ein versatzloses Trennen der in sich geschlossenen Konturen 106 und 107.

Gemäß der Erfindung wird das Glas entlang der Trennlinie gebrochen, wie nachfolgend beschrieben.

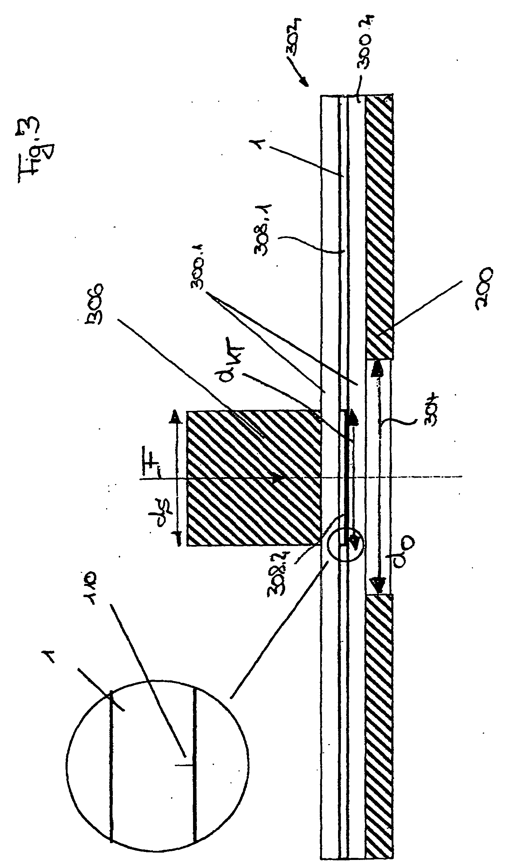

In Figur 3 ist das erfindungsgemäße Verfahren zum Brechen von Glasscheiben aus Flachglas 1 gezeigt. Das Flachglas 1, aus dem eine Glasscheibe beliebiger Kontur herausgebrochen werden soll, liegt zwischen zwei flexiblen Platten 300.1 und 300.2, die aus Plexiglas gefertigt sein können. Die Platten 300.1 und 300.2 schließen das Flachglas 1 ein und bilden eine Art Paket 302 aus. Das Paket aus Flachglas 1 sowie den flexiblen Platten 300.1 und 300.2 liegt auf einer Unterlage 200 mit einer Öffnung 304 auf. Der Durchmesser der Öffnung dₒ ist stets größer als der Durchmesser der kreisbogenförmigen Trennlinie d_{KT}.

Zum Herausbrechen der Glasscheibe aus dem Flachglas entlang der Trennlinie wird von der der Öffnung gegenüberliegenden Seite 304 beispielsweise mit einem Stempel 306 mit einer Kraft F gedrückt. Der Stempel 306 weist einen Durchmesser dₛ auf, der geringer ist als der Durchmesser der Öffnung dₒ. Durch die Kraft F werden die flexiblen Platten 300.1 und 300.2 sowie das Flachglas 1 gebogen. Es entsteht im Riß bzw. der Trennlinie 110 eine Zugspannung. Durch die Kraft F wird der Riß durch das Material 1 hindurchgetrieben, so daß der Außenbereich des Flachglases 308.1 vollständig vom Innenbereich 308.2, der beispielsweise der Kontur der herauszubrechenden Glasscheibe und damit dem Außendurchmesser entspricht, getrennt wird. Besonders vorteilhaft an dem Verfahren gemäß der zweiten Ausführungsform der Erfindung ist, daß durch das flexible Material 300.1, 300.2, das das Flachglas 1 umschließt, das Ausbrechen am Rand durch Schubspannungen verhindert werden kann. Des weiteren wird die Oberfläche des Flachglases geschützt.

Das züvor beschriebenen Verfahren eignert sich sowohl für das Trennen bzw. Brechen der gesamten Glasscheibe aus dem Flachglas 1 wie auch das Trennen bzw. Brechen der Innenbohrung, beispielsweise wenn die Glasscheibe für eine Harddisk verwendet wird.

Nachfolgend soll noch ein konkretes Ausführungsbeispiel der Erfindung gegeben werden:

Aus einer Flachglasscheibe mit den Abmessungen 80 x 80 x 0,7 mm wird eine Harddiskscheibe mit einem Außendurchmesser von 65 mm und einem Innendurchmesser von 20 mm wie folgt herausgebrochen: Zunächst wird mit einer Laserschneideanlage ein Ritz auf der Oberseite wie folgt eingebracht: Zunächst wird die Glasscheibe mit Diamant angeritzt, der eine Initialverletzung am Kreisumfang einbringt. Sodann wird mit einem Laser, der zu einem V-förmigen Brennfleck aufgeweitet wird, aufgeheizt, wobei durch einen Äthanol- Luft- Strahl gekühlt wird. Nachdem die Trennlinien eingebracht sind, wird nach der Stempel/Ring-Methode der Innendurchmesser und der Außendurchmesser herausgebrochen bis gilt: für den Innendurchmesser ø d(Stempel) = 20 mm, d(Ring) = 50 mm, h(Plexiglas) = 2 mm; für den Außendurchmesser ø d(Stempel) = 65 mm, d(Ring) = 80 mm, h(Plexiglas) = 2 mm, wobei der Stempel über eine kraftgesteuerte Linearachse zugestellt wird.

Das Vereinzeln bzw. Separieren der gebrochenen bzw. getrennten Teile geschieht für das Außenteil mit heißer Luft von ca. 200°C und für das Innenteil mit flüssigem Stickstoff.

Mit dem vorliegenden Verfahren werden erstmals Ritz-Brech-Methoden angegeben, mit denen Glassubstrate aus Glasscheiben ohne Beschädigung der Oberfläche herausgebrochen werden können.

### Bezugszeichenliste

- 1: Flachglas
- 22: Schneidewerkzeug
- 24: Glasoberfläche
- 26: Trennlinie
- 100: Harddisk
- 102: Brennfleck des Lasers
- 104: Kühlspot
- 106: Außenkontur
- 107: Innenkontur
- 108: Riß
- 110: Laserritz
- 200: Unterlage
- 300.1:
- 300.2: flexible Platten
- 302: Paket
- 304: Öffnung der Unterlage
- 306: Stempel
- 308.1: Innenbereich
- 308.2: Außenbereich

## Patentansprüche

1. Verfahren zur Herstellung von Glasscheiben beliebiger Kontur aus Flachgläsern, umfassend die nachfolgenden Schritte:
1.1 das Ritzen von Trennlinien (26, 110, 106, 107) entlang der Kontur bis zu einer Tiefe T_{Glasscheibe} mit Hilfe einer Schneideeinrichtung in mindestens eine Seite des Flachglases (1),
1.2 das Positionieren des Flachglases (1) auf einer Unterlage (200), wobei die Unterlage eine Öffnung aufweist,
1.3 auf das Flachglas (1) wird eine Kraft F mittels einer Drückeinrichtung auf der der Öffnung gegenüberliegenden Seite aufgebracht, welche Kraft so groß ist, dass ein Riss entlang der Trennlinien (26, 110, 106, 107) entsteht,
1.4 wobei durch das Aufbringen der Kraft F der Riss durch die Gesamtdicke des Flachglases (1) durchgetrieben wird, welches dadurch gebrochen wird **dadurch gekennzeichnet, dass**
1.5 das Flachglas (1) zwischen zwei flexible Platten (300.1, 300.2) eingebracht wird, welche mit dem Flachglas (1) ein Paket ausbilden, das auf die Unterlage (200) aufgelegt wird, und
1.6 dass die Öffnung (304) größer ist als die durch die Trennlinien geritzte Kontur.

2. Verfahren nach Anspruch 1, **dadurch gekennzeichnet, dass** anschließend an das Brechen die Glasscheiben vereinzelt werden.

3. Verfahren gemäß einem der Ansprüche 1 bis 2, **dadurch gekennzeichnet, dass** die Glasscheiben Glassubstrate für Speichermedien sind und die Trennlinie einer kreisförmigen Trennlinie, der ein Außen- und/oder ein Innendurchmesser zugeordnet ist, entspricht.

4. Verfahren gemäß einem der Ansprüche 1 bis 3, **dadurch gekennzeichnet, dass** die Schneideeinrichtung eine Laser-Schneideeinrichtung oder eine mechanische Schneideeinrichtung ist.

5. Verfahren gemäß einem der Ansprüche 1 bis 4, **dadurch gekennzeichnet, dass** die Öffnung eine kreisförmige Kontur aufweist.

6. Verfahren nach einem der Ansprüche 1 bis 5, **dadurch gekennzeichnet, dass** das Flachglas derart positioniert wird, dass die Trennlinie zur Öffnung bzw. zu den Öffnungen ausgerichtet ist.

7. Verfahren nach einem der Ansprüche 1 bis 5, **dadurch gekennzeichnet, dass** die Glasscheibe (1) vor Aufbringen auf die Unterlage (200) gewendet wird, so dass die Seite der Glasscheibe (1), in die die Ritze eingetrieben sind, auf der Unterlage (200) aufliegt.

8. Verfahren nach einem der Ansprüche 3 bis 7, **dadurch gekennzeichnet, dass** die Unterlage (200) drehbar ist und die Glasscheibe (1) auf der Unterlage (200) derart positioniert wird, dass der Drehpunkt der Unterlage (200) mit dem Mittelpunkt durch die ringförmige erste und zweite Trennlinie (106, 107) definierten Außen- bzw. Innendurchmessers zusammenfällt.

9. Verfahren nach Anspruch 8, **dadurch gekennzeichnet, dass** der durch das Aufbringen der Kraft F entlang der bzw. den Trennlinien (26, 101, 106, 107) entstandene Riss durch das Drehen der Unterlage (200) weiter getrieben wird.

10. Verfahren nach einem der Ansprüche 1 bis 9, **dadurch gekennzeichnet, dass** die flexiblen Platten Plexiglas umfassen.

11. Verfahren nach einem der Ansprüche 1 bis 10, **dadurch gekennzeichnet, dass** die Drückeinrichtung zum Aufbringen der Kraft F Kugeln oder Rädchen (204) umfasst, die eine Kraft lokal auf die Glasscheibe aufbringen.

12. Verfahren nach Anspruch 11, **dadurch gekennzeichnet, dass** die Einrichtung zum Aufbringen der Kraft eine variable Kraft aufbringt.

13. Verfahren nach einem der Ansprüche 1 bis 12, **dadurch gekennzeichnet, dass** die Drückeinrichtung zum Aufbringen der Kraft einen Stempel (306) mit einer Stempelfläche umfasst.

14. Verfahren nach Anspruch 13, **dadurch gekennzeichnet, dass** die Stempelfläche in ihrer Form der Kontur der Trennlinie entspricht.

15. Verfahren nach Anspruch 13 oder 14, **dadurch gekennzeichnet, dass** die Stempelfläche kreisförmig ist.

16. Verfahren nach Anspruch 13 oder 14, **dadurch gekennzeichnet, dass** die Stempelfläche kreisringförmig ist.

17. Verfahren nach einem der Ansprüche 1 bis 16, **dadurch gekennzeichnet, dass** die Unterlage (200) eine Tasche (400) oder eine Nut umfasst.

18. Verfahren nach Anspruch 17, **dadurch gekennzeichnet, dass** die Tasche oder Nut eine Form aufweist, die in ihrer Form der Kontur der Trennlinie entspricht.

19. Verfahren nach einem der Ansprüche 1 bis 18, **dadurch gekennzeichnet, dass** die Kraft in Form von Fluid, insbesondere Druckluft und/oder einer Druckdifferenz, insbesondere Vakuum aufgebracht wird.

20. Vorrichtung zum Brechen von Glasscheiben beliebiger Kontur aus einem Flachglas (1), umfassend
20.1 eine Unterlage (200) mit einer Öffnung (304);
20.2 eine Positioniervorrichtung zum Positionieren des Flachglases (1) auf der Untertage;
20.3 eine Schneideinrichtung zum Ritzen von Trennlinien (26, 110, 106, 107) entlang der Kontur bis zu einer Tiefe T_{Glasscheibe} in mindestens eine Seite des Flachglases (1);
20.4 eine Drückeinrichtung zum Aufbringen einer Kraft F auf der der Öffnung gegenüberliegenden Seite auf das Flachglas (1), welche Kraft F so groß ist, dass ein Riss entlang der Trennlinien (26, 110, 106, 107) entsteht und durch das Aufbringen der definierten Kraft der Riss durch die Gesamtdicke des Flachglases (1) durchgetrieben wird; **dadurch gekennzeichnet, dass**
20.5 die Vorrichtung zwei flexible Platten (301, 302) umfasst, welche das Flachglas (1) beim Auflegen auf der Unterlage (200) zwischen sich einschließen, und die Öffnung (304) größer ist als die Kontur der Glasscheiben.

21. Vorrichtung nach Anspruch 20, **dadurch gekennzeichnet, dass** die Drückeinrichtung zum Aufbringen der Kraft F Rädchen (204) oder Kugeln umfasst.

22. Vorrichtung nach Anspruch 21, **dadurch gekennzeichnet, dass** die Drückeinrichtung zum Aufbringen der Kraft F ein Stempel (306) ist.

23. Vorrichtung nach einem der Ansprüche 20 bis 22, **dadurch gekennzeichnet, dass** die Unterlage eine Öffnung aufweist, die in ihrer Form im wesentlichen der Form der Kontur der Trennlinie entspricht.

24. Vorrichtung nach einem der Ansprüche 20 bis 22, **dadurch gekennzeichnet, dass** die Unterlage eine Tasche (400) umfasst.

25. Vorrichtung nach Anspruch 24, **dadurch gekennzeichnet, dass** die Tasche einen Vakuumanschluss (402) umfasst.

## Revendications

1. Procédé pour la fabrication de plaques de verre ayant n'importe quel contour souhaité à partir de verre plat, comprenant les étapes suivantes :
1.1 incision de lignes de découpe (26, 110, 106, 107) le long du contour jusqu'à une profondeur T_{plaque de verre} à l'aide d'un dispositif de découpe sur au moins une face du verre plat (1),
1.2 positionnement du verre plat (1) sur un support (200), lequel support possède une ouverture,
1.3 application sur le verre plat (1) d'une force F au moyen d'un dispositif de pression sur le côté faisant face à l'ouverture, laquelle force est suffisante pour qu'une fissure se forme le long des lignes de coupe (26, 110, 106, 107),
1.4 l'application de la force F entraînant la propagation de la fissure sur toute l'épaisseur du verre plat (1), qui est ainsi cassé,
**caractérisé en ce que**
1.5 le verre plat (1) est inséré entre deux plaques flexibles (300.1, 300.2) formant avec le verre plat (1) un paquet qui est posé sur le support (200), et
1.6 **en ce que** l'ouverture (304) est plus grande que le contour incisé par les lignes de découpe.

2. Procédé selon la revendication 1, **caractérisé en ce que** les plaques de verre sont séparées après la rupture.

3. Procédé selon l'une quelconque des revendications 1 à 2, **caractérisé en ce que** les plaques de verre sont des substrats en verre pour des supports de mémoire et la ligne de découpe correspond à une ligne de découpe circulaire qui est associée à un diamètre extérieur et/ou un diamètre intérieur.

4. Procédé selon l'une quelconque des revendications 1 à 3, **caractérisé en ce que** le dispositif de découpe est un dispositif de découpe au laser ou un dispositif de découpe mécanique.

5. Procédé selon l'une quelconque des revendications 1 à 4, **caractérisé en ce que** l'ouverture présente un contour circulaire.

6. Procédé selon l'une quelconque des revendications 1 à 5, **caractérisé en ce que** le verre plat est positionné de telle manière que la ligne de découpe soit orientée vers la ou les ouvertures.

7. Procédé selon l'une quelconque des revendications 1 à 5, **caractérisé en ce que** le la plaque de verre (1) est tournée avant d'être posée sur le support (200), de telle sorte que la face de la plaque de verre (1) dans laquelle les incisions sont pratiquées repose sur le support (200).

8. Procédé selon l'une quelconque des revendications 3 à 7, **caractérisé en ce que** le support (200) est rotatif et la plaque de verre (1) est positionnée sur le support (200) de telle sorte que le point de rotation du support (200) concorde avec le centre du diamètre extérieur ou intérieur défini par les première et deuxième lignes de découpe (106, 107) en anneau.

9. Procédé selon la revendication 8, **caractérisé en ce que** la fissure formée par l'application de la force F le long de la ou des lignes de découpe (26, 101, 106, 107) est propagée par la rotation du support (200).

10. Procédé selon l'une quelconque des revendications 1 à 9, **caractérisé en ce que** les plaques flexibles se composent de plexiglas.

11. Procédé selon l'une quelconque des revendications 1 à 10, **caractérisé en ce que** le dispositif de pression destiné à exercer la force F comprend des billes ou des roulettes (204) qui exercent une force locale sur la plaque de verre.

12. Procédé selon la revendication 11, **caractérisé en ce que** le dispositif destiné à exercer la force exerce une force variable.

13. Procédé selon l'une quelconque des revendications 1 à 92, **caractérisé en ce que** le dispositif de pression destiné à exercer la force possède un poinçon (306) avec une surface de poinçon.

14. Procédé selon la revendication 13, **caractérisé en ce que** la surface de poinçon a la même forme que le contour de la ligne de découpe.

15. Procédé selon la revendication 13 ou 14, **caractérisé en ce que** la surface de poinçon est circulaire.

16. Procédé selon la revendication 13 ou 14, **caractérisé en ce que** la surface de poinçon est en forme d'anneau circulaire.

17. Procédé selon l'une quelconque des revendications 1 à 16, **caractérisé en ce que** le support (200) possède une poche (400) ou une gorge.

18. Procédé selon la revendication 17, **caractérisé en ce que** la poche ou la gorge a une forme correspondant au contour de la ligne de découpe.

19. Procédé selon l'une quelconque des revendications 1 à 18, **caractérisé en ce que** la force est exercée sous la forme d'un fluide, en particulier d'air comprimé, et/ou d'une différence de pression, en particulier de vide.

20. Dispositif pour détacher des plaques de verre ayant n'importe quel contour souhaité à partir d'un verre plat (1), comprenant :
20.1 un support (200) avec une ouverture (304) ;
20.2 un dispositif de positionnement pour positionner le verre plat (1) sur le support ;
20.3 un dispositif de découpe destiné à inciser des lignes de découpe (26, 110, 106, 107) le long du contour jusqu'à une profondeur T_{plaque de verre} sur au moins une face du verre plat (1) ;
20.4 un dispositif de pression destiné à exercer une force F sur le côté du verre plat (1) faisant face à l'ouverture, laquelle force F est suffisamment grande pour qu'une fissure se forme le long des lignes de découpe (26, 110, 106, 107) et se propage lors de l'application de la force définie à travers toute l'épaisseur du verre plat (1),
**caractérisé en ce que**
20.5 le dispositif comprend deux plaques flexibles (301, 302) qui renferment le verre plat (1) entre elles lors de la pose sur le support (200) et l'ouverture (304) est plus grande que le contour des plaques de verre.

21. Dispositif selon la revendication 20, **caractérisé en ce que** le dispositif de pression destiné à appliquer la force F comprend des roulettes (204) ou des billes.

22. Dispositif selon la revendication 21, **caractérisé en ce que** le dispositif de pression destiné à appliquer la force F est un poinçon (306).

23. Dispositif selon l'une quelconque des revendications 20 à 22, **caractérisé en ce que** le support possède une ouverture dont la forme correspond sensiblement au contour de la ligne de découpe.

24. Dispositif selon l'une quelconque des revendications 20 à 22, **caractérisé en ce que** le support possède une poche (400).

25. Dispositif selon la revendication 24, **caractérisé en ce que** la poche comprend un raccord de vide (402).

## Claims

1. A method for producing glass panels of random shape made of flat sheet glass, comprising the following steps:
1.1 the scratching of severing lines (26, 110, 106, 107) along the shape up to a depth T_{glass panel} with the help of a cutting device into at least one side of the flat sheet glass (1);
1.2 the positioning of the flat sheet glass (1) on a base (200), with the base having an opening;
1.3 a force is applied onto the flat sheet glass (1) by means of a pressing device on the side opposite of the opening, which force is dimensioned in such a way that a fissure is obtained along the severing lines (26, 110, 106, 107);
1.4 with the fissure being driven through the entire thickness of the flat sheet glass (1) by the application of the force F, which is broken thereby, **characterized in that**
1.5 the flat sheet glass (1) is introduced between two flexible plates (300.1, 300.2) which form a package with the flat sheet glass (1) which is placed on the base (200), and
1.6 that the opening (304) is larger than the shape scratched by the severing lines.

2. A method according to claim 1, **characterized in that** after the breaking the glass panels are singled.

3. A method according to one of the claims 1 to 2, **characterized in that** the glass panels are glass substrates for storage media and the severing line corresponds to a circular severing line which is associated with an outside and/or inside diameter.

4. A method according to one of the claims 1 to 3, **characterized in that** the cutting device is a laser cutting device or a mechanical cutting device.

5. A method according to one of the claims 1 to 4, **characterized in that** the opening has a circular shape.

6. A method according to one of the claims 1 to 5, **characterized in that** the flat sheet glass is positioned in such a way that the severing line is aligned towards the opening or openings.

7. A method according to one of the claims 1 to 5, **characterized in that** the glass panel (1) is turned prior to the placement on the base (200), so that the side of the glass panel (1) into which the notch is driven rests on the base (200).

8. A method according to one of the claims 3 to 7, **characterized in that** the base (200) is rotatable and the glass panel (1) is positioned on the base (200) in such a way that the center of motion of the base (200) coincides with the centre of the outside or inside diameter defined by the annular first and second severing line (106, 107).

9. A method according to claim 8, **characterized in that** the fissure produced by the application of the force F along the severing line(s) (26, 101, 106, 107) is driven further by the rotation of the base (200).

10. A method according to one of the claims 1 to 9, **characterized in that** the flexible plates comprise plexiglass.

11. A method according to one of the claims 1 to 10, **characterized in that** the pressing device for applying the force F comprises balls or wheels (204) which apply a force locally onto the glass panels.

12. A method according to claim 11, **characterized in that** the device for applying the force applies a variable force.

13. A method according to one of the claims 1 to 12, **characterized in that** the pressing device for applying the force comprises a plunger (306) with a plunger surface.

14. A method according to claim 13, **characterized in that** the plunger surface corresponds in its form to the shape of the severing line.

15. A method according to claim 13 or 14, **characterized in that** the plunger surface is circular.

16. A method according to claim 13 or 14, **characterized in that** the plunger surface is annular.

17. A method according to one of the claims 1 to 16, **characterized in that** the base (200) comprises a bag (400) or a groove.

18. A method according to claim 17, **characterized in that** the bag or groove has a shape which in its shape corresponds to the shape of the severing line.

19. A method according to one of the claims 1 to 18, **characterized in that** the force is applied in the form of fluid, especially compressed air and/or a pressure difference, especially vacuum.

20. An apparatus for braking glass panels of random shape made of a flat sheet glass (1), comprising
20.1 a base (200) with an opening (304);
20.2 a positioning apparatus for positioning the flat sheet glass (1) on the base;
20.3 a cutting device for notching severing lines (26, 110. 106, 107) along the shape up to a depth T_{glass panel} in at least one side of the flat sheet glass;
20.4 a pressing device for applying a force F onto the flat sheet glass (1) on the side opposite of the opening, which force F is dimensioned in such a way that a fissure is obtained along the severing lines (26, 110, 106, 107) and the fissure is driven through the entire thickness of the flat sheet glass (1) by the application of the defined force, **characterized in that**
20.5 the apparatus comprises two flexible plates (301, 302) which enclose between themselves the flat sheet glass (1) on placement on the base (200) and the opening (304) is larger than the shape of the glass panels.

21. An apparatus according to claim 20, **characterized in that** the pressing device comprises wheels (204) or balls for applying the force F.

22. An apparatus according to claim 21, **characterized in that** the pressing device for applying the force F is a plunger (306).

23. An apparatus according to one of the claims 20 to 22, **characterized in that** the base comprises an opening which in its shape corresponds substantially to the shape of the severing line.

24. An apparatus according to one of the claims 20 to 22, **characterized in that** the base comprises a bag (400).

25. An apparatus according to claim 24, **characterized in that** the base comprises a vacuum connection (402).
